# EUROPEAN PATENT APPLICATION

(11) **EP 0 631 141 A1**
(43) Date of publication of application: **28.12.1994**
(21) Application number: 94201462.2
(22) Date of filing: 24.05.1994
(51) Int. Cl.: G01P 3/486, G01P 3/49

(54) **Speedometer**

(30) Priority: 25.06.1993 GB 9313099
(71) Applicant: DELCO ELECTRONICS OVERSEAS CORPORATION, Detroit, Michigan 48202 (US)
(72) Inventor: Simmonite, Henry, Dinsdale, Southport PR8 2RW (GB); Allan, David Stewart, Ashton-in-Makerfield, Wigan WN4 0BD (GB)
(74) Representative: Denton, Michael John

(57) **Abstract**

A speedometer (10) comprising a drive shaft (12) rotatable about an axis (A); a magnet assembly (22) fixedly connected to one end (24) of the drive shaft; magnetically responsive means (52) spaced from and substantially surrounding an outer circumference of the magnet assembly, the magnetically responsive means being pivotable about the axis in response to rotation of the magnet assembly; and indicating means (56) connected to the magnetically responsive means to provide an indication of speed; the magnet assembly comprising a magnet (26), a mounting means (30) of plastics material which is moulded around the magnet, the mounting means being secured to the end of the drive shaft, and optical contrast means positioned on the opposite side (40) of the mounting means to the indicating means adjacent the outer circumference of the mounting means and comprising a pattern of a plurality of substantially identical, equidistantly spaced, shaped portions (38) of metallic foil formed by hot foil printing.

## Description

This invention relates to a speedometer, and in particular to an improved magnet assembly for the speedometer.

In known arrangements, a speedometer comprises a drive shaft (which usually receives a mechanical cable drive, for example, from a transmission of a motor vehicle) connected to a magnet assembly to rotate the magnet assembly. The magnetic flux produced by the rotating magnet assembly drives, by way of an aluminium or copper cup, a pointer spindle and pointer of the speedometer to provide an indication of speed. The magnet assembly, which is usually a force-fit on the end of the drive shaft, comprises a magnet and temperature compensator encapsulated in a plastics moulding. The underside (that is, the side directed away from the pointer) of the moulding may have a pattern printed thereon. An optical sensor directed towards the pattern produces a series of electrical pulses as the pattern rotates which can be used in computer-based control units within the vehicle.

Because of the complicated shape that the plastics material has to flow around in order to create the encapsulated part, the plastics material must be of a type which is free-flowing. A disadvantage of having to use a free-flowing plastics material is that the material is subjected to shrinkage after moulding which produces an uneven surface on the underside of the magnet assembly, making accurate printing of the pattern very difficult. Poor or inaccurate printing of the pattern leads to distorted electrical pulses being generated by the optical sensor, making accurate determination of velocity very difficult. This problem is accentuated when the required number of electrical pulses per revolution of the magnet assembly is increased.

It is an object of the present invention to provide an improved magnet assembly for a speedometer.

To this end, a speedometer in accordance with the present invention comprises a drive shaft rotatable about an axis; a magnet assembly fixedly connected to one end of the drive shaft; magnetically responsive means spaced from and substantially surrounding an outer circumference of the magnet assembly, the magnetically responsive means being pivotable about the axis in response to rotation of the magnet assembly; and indicating means connected to the magnetically responsive means to provide an indication of speed; the magnet assembly comprising a magnet, a mounting means of plastics material which is moulded around the magnet, the mounting means being secured to the end of the drive shaft, and optical contrast means positioned on the opposite side of the mounting means to the indicating means adjacent the outer circumference of the mounting means and comprising a pattern of a plurality of substantially identical, equidistantly spaced, shaped portions of metallic foil formed by hot foil printing.

Preferably, the metallic foil is of polished non-ferrous metallic material, such as silver. The plastics mounting means is preferably black in colour. The shaped portions preferably have the shape of a truncated sector.

The mounting means preferably has a bore which is centrally positioned and which has a diameter of a size to make an interference fit with the one end of the drive shaft.

The present invention overcomes the problems associated with using a free-flowing plastics moulding in the magnet assembly in that the shaped portions are formed on the underside of the mounting means by hot foil printing to provide the required optical contrast, thereby overcoming the problem of any uneven surface. Use of a metallic surface for the shaped portions provides improved reflective qualities for the required optical contrast relative to the plastics moulding. The improved optical contrast between the reflective and non-reflective surfaces provides better electrical pulses from the optical sensor, thereby providing advantages in respect of the electrical circuitry associated therewith.

The present invention will now be described, by way of example, with reference to the accompanying drawings, in which:-
Figure 1 is a partial cross-section of an embodiment of speedometer in accordance with the present invention; and
Figure 2 is a view of the underside of the magnet assembly of the speedometer shown in Figure 1.

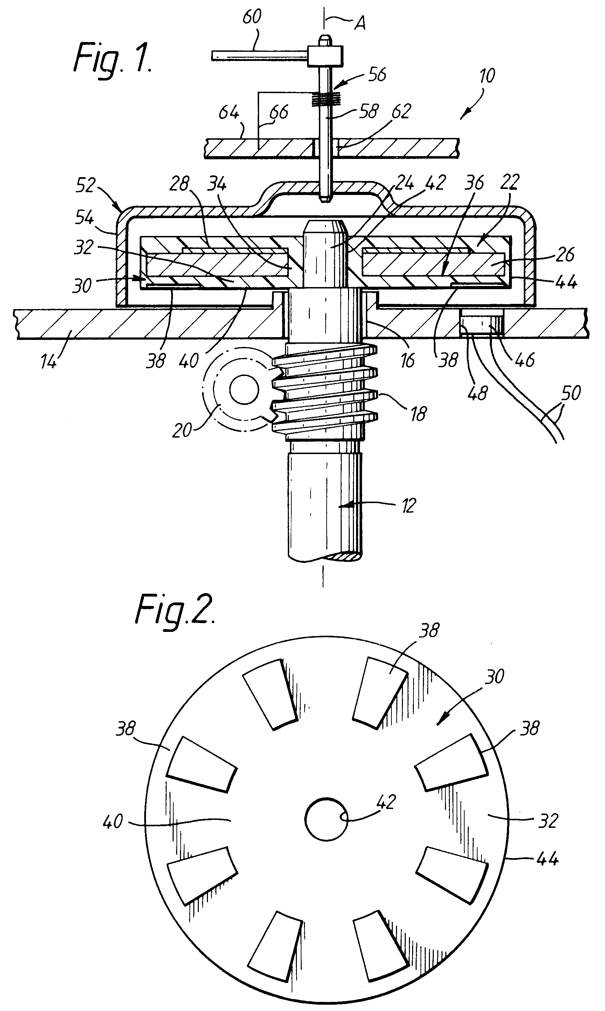

Referring to Figures 1 and 2 of the drawings, a speedometer 10 in accordance with the present invention is shown. Some of the parts of the speedometer have been omitted for the sake of clarity. Those parts which are missing are standard parts which are well known to those skilled in the art. The speedometer 10 comprises a drive shaft 12 which is connected to be driven by a cable (not shown) connected to a transmission of a motor vehicle. The drive shaft 12, when driven by the cable, rotates about an axis A relative to a fixed part 14 of a housing of the speedometer. Bearing means 16 secured to the fixed part 14 rotatably mounts the drive shaft 12 to the fixed part 14. The drive shaft 12 can include a worm gear 18 for driving a second worm gear 20 which actuates an odometer as is well known to those skilled in the art.

A magnet assembly 22 is secured to one end 24 of the drive shaft 12 and rotates with the drive shaft. The magnet assembly 22 comprises a magnet 26, a temperature compensator 28, and a mounting means 30 of plastics material (such as polyester). The temperature compensator 28 provides magnetic flux stability throughout the normal operational temperature range of the speedometer 10. The mounting means 30 is moulded in one-piece around the magnet 26 and temperature compensator 28 and comprises a plate portion 32 which is substantially annular and flat, with a cylindrical portion 34 projecting away from the upperside 36 of the plate portion. The cylindrical portion 34 is centrally positioned and defines a bore 42 which has a diameter sized to make an interference fit with the end 24 of the drive shaft 12 to secure the magnet assembly 22 thereto. The magnet 26 is positioned to surround the cylindrical portion 34, with the temperature compensator 28 placed on top of the magnet, the mounting means 30 is then moulded around the magnet and temperature compensator to secure the magnet and temperature compensator within the mounting means. A predetermined pattern is formed in the underside 40 of the plate portion 32. The pattern is formed by hot foil printing of a metallic foil and comprises a plurality of shaped portions 38. The shaped portions 38 are substantially identical in shape and size, and substantially equidistantly spaced adjacent the outer circumference 44 of the underside 40 of the plate portion 32 - see Figure 2. The shaped portions 38 preferably have the shape of a truncated sector. The surface of each shaped portion 38 is shiny, whereas the surface of the underside 40 of the plate portion 32, at least between the shaped portions, is left as moulded, so as to provide an optical contrast between the surface of each shaped portion and the surface of the underside of the plate portion intermediate the shaped portions.

Hot foil printing comprises placing a laminated sheet of metallic foil and backing paper against the underside 40 of the mounting means 30 with the metallic foil in contact with the underside 40, and pressing the laminated sheet with a patterned surface of a heated rubber stamp. The patterned surface is predetermined and substantially identical to the pattern of shaped portions 38 required. The application of heat and pressure by the rubber stamp transfers the metallic foil in the pattern of the shaped portions 38 to the underside 40 of the mounting means 30.

An optical sensor 46 is secured in an aperture 48 in the fixed part 14 of the speedometer housing below the shaped portions 38. As the plate portion 32 rotates, the optical contrast between the surface of each shaped portion 38 and the surface of the underside 40 of the plate portion 32 intermediate the shaped portions produces an electrical pulse in leads 50 attached to the optical sensor. These pulses, which provide an electrical signal indicative of the speed of the motor vehicle, can be fed to computer-based control units (not shown) in the motor vehicle for controlling other functions within the motor vehicle. The number of pulses per revolution of the magnet assembly 22 is obviously dependent on the number of shaped portions 38.

A magnetically responsive means 52 in the form of a cup 54 is spaced from, and substantially surrounds, the outer circumference of the magnet assembly 22. The cup 54 is made from any suitable non-magnetic, electrically conductive, metal or metal alloy, such as aluminium or copper. The cup 54 is secured to indicating means 56 comprising a pointer spindle 58 and a pointer 60. The pointer spindle 58 has a longitudinal axis aligned with the axis A, and is rotatably mounted, by way of bearing means 62, to another fixed part 64 of the speedometer housing. The pointer 60 is secured to the pointer spindle 58. A spiral or hair spring 66 is secured between the pointer spindle 58 and the fixed part 64.

In use, as the motor vehicle accelerates from rest, the drive shaft 12 rotates about axis A, thereby causing the magnet assembly to also rotate about axis A. The rotation of the magnet 26 creates electrical (eddy) currents in the cup 54 due to the rotation of the magnetic field produce by the magnet. The eddy currents induced in the cup 54 produce their own magnetic field which interacts with the magnetic field of the magnet to produce a torque which tends to rotate the cup about axis A in the same direction as the magnet 26. The bias exerted by the spiral spring 66 acts against the action of this torque, to restrict the movement of the cup to that of a pivoting action about the axis A. The higher the speed of the motor vehicle, the faster the rotation of the magnet 26, and the greater the angle that the cup 54 (and hence, the pointer 60) pivots through. Consequently, the angle through which the pointer 60 moves provides an indication of the speed of the motor vehicle.

For the sake of clarity, the upperside 36 of the plate portion 32 is the side facing the pointer 60, and the underside 40 is the side facing away from the pointer.

The metallic foil could be of any suitable polished non-ferrous material, but is preferably of silver. The plastics mounting means 30 is preferably black in colour (or of any suitable non-reflective colour). This arrangement provides improved optical contrast between the shaped portions 38 and the surface of the underside 40 of the plate portion 32 intermediate the shaped portions. This arrangement is particularly beneficial where the number of shaped portions 38 is increased to provide a greater number (for example, fifteen) of electrical pulses per revolution of the magnet assembly 22. The number, size and shape of the shaped portions 38 is predetermined to provide the required signal from the optical sensor 46.

By improving the optical contrast scanned by the optical sensor 46, the optical sensor produces electrical pulses which are a much sharper square wave signal with better signal strength. This allows the electronic circuitry associated with the optical sensor 46 to be made from cheaper components.

Further alternatives to all the above embodiments include the magnet assembly being secured to the end of the drive shaft by any suitable means other than an interference or force fit. The speedometer may be used on other vehicles besides motor vehicles.

The disclosures in British patent application no. 9313099.5, from which this application claims priority, and in the abstract accompanying this application are incorporated herein by reference.

## Claims

1. A speedometer (10) comprising a drive shaft (12) rotatable about an axis (A); a magnet assembly (22) fixedly connected to one end (24) of the drive shaft; magnetically responsive means (54) spaced from and substantially surrounding an outer circumference of the magnet assembly, the magnetically responsive means being pivotable about the axis in response to rotation of the magnet assembly; and indicating means (56) connected to the magnetically responsive means to provide an indication of speed; the magnet assembly comprising a magnet (26), a mounting means (30) of plastics material which is moulded around the magnet, the mounting means being secured to the end of the drive shaft, and optical contrast means positioned on the opposite side (40) of the mounting means to the indicating means adjacent the outer circumference of the mounting means, characterised in that the optical contrast means comprises a pattern of a plurality of substantially identical, equidistantly spaced, shaped portions (38) of metallic foil formed by hot foil printing.

2. A speedometer as claimed in Claim 1, wherein the metallic foil is of polished non-ferrous metallic material.

3. A speedometer as claimed in Claim 2, wherein the metallic foil is silver.

4. A speedometer as claimed in Claim 2 or Claim 3, wherein the plastics mounting means (30) is black in colour.

5. A speedometer as claimed in any one of Claims 1 to 4, wherein the mounting means (30) has a bore (42) which is centrally positioned and which has a diameter of a size to make an interference fit with the one end (24) of the drive shaft (12).
